# EUROPEAN PATENT SPECIFICATION

(11) **EP 3 498 464 B1**
(45) Date of publication and mention of the grant of the patent: **07.10.2020**
(21) Application number: 18210837.3
(22) Date of filing: 06.12.2018
(51) Int. Cl.: B29D 30/24, B29D 30/30

(54) **METHOD AND APPARATUS FOR MAKING A MULTI-COMPONENT TIRE**
VERFAHREN UND VORRICHTUNG ZUR HERSTELLUNG EINES MEHRKOMPONENTENREIFENS
PROCÉDÉ ET DISPOSITIF DE FABRICATION D'UN PNEU À COMPOSANTS MULTIPLES

(30) Priority: 14.12.2017 US 201715841502
(43) Date of publication of application: 19.06.2019
(73) Proprietor: The Goodyear Tire & Rubber Company, Akron, OH 44316 (US)
(72) Inventor: STUBER, Neil Philip, Munroe Falls, OH 44262 (US); CURRIE, William Dudley, Stow, OH 44224 (US); VARGO, Richard David, Cuyahoga Falls, OH 44223 (US)
(74) Representative: Kutsch, Bernd

(56) References cited:
- WO-A1-02/00421
- US-A- 3 580 781
- US-A- 3 779 834

## Description

### Field of the Invention

This invention relates to a tire manufacturing system and, more particularly, to a method and apparatus for building tires of multiple components and, even more particularly, for accomplishing the above in two-stage building without storage of components.

### Background of the Invention

Two stage tire building with a first stage tire building drum in combination with a second stage tire building drum is well known and established in the art with the building drums being both in line and offset from each other. It is further known to have two-stage tire building with a single drum swinging between the first stage position and the second stage position where a band builder is in line with the first stage building drum. For this system, individual breaker application and single piece tread rubber are applied at the second stage while components such as apex chafers and shoulder wedges are applied at the first stage. The above components are made in separate operations and stored for use as needed in the two-stage building process.

It is also well known to use a strip applier to place a continuous strip, as by lamination or spiral winding, onto a tire to accumulate the necessary rubber for the tire tread. Further it is known to use a particular shape of ribbon for the above process and to use a strip applier for applying sidewall and sidewall scuff rib to the tire from a cold feed extruder supplying the strip to the strip applicator.

While the two-stage building process in its separate stages may accommodate servers for the various components, it also requires a large work area for the two separate positions and the need to coordinate the separate functions, as well as bringing all of the components together at proper stations. As a result, the components have been stored and subject to aging, sometimes losing their tack, for example, during the handling of the individually applied components. Further, changing from one tire subassembly step to another has been a highly labor-intensive operation even with the use of mechanical servers to assist operators in placing the components on the tire on the first and second stage drums. As a result, the operation has been costly.

US-A-3, 779, 834 describes an apparatus in accordance with the preamble of claim 1.

### Summary of the Invention

The invention relates to an apparatus in accordance with claim 1 and to a method in accordance with claim 6.

Dependent claims refer to preferred embodiments of the invention.

An apparatus in accordance with the present invention allows it to build an uncured tire. The apparatus includes a cylindrical tire building drum for receiving a ply structure, an applicator for applying a first wedge strip and a second wedge strip to each of two shoulder portions of the ply structure, an extruder for dispensing a strip of material, and a cutting device for splitting the strip of material into the first wedge strip and the second wedge strip.

According to a preferred aspect of the apparatus, the apparatus further includes an expander for the ply structure.

According to still another preferred aspect of the apparatus, the first wedge strip and the second wedge strip have equal widths.

According to the invention, the apparatus further includes a cooler or 1 festoon for the strip of material.

According to still another preferred aspect of the apparatus, the apparatus further includes a clamp for securing the ply structure to the expander.

According to yet another preferred aspect of the apparatus, the extruder is disposed proximate to the cylindrical tire building drum.

According to still another preferred aspect of the apparatus, the cutting device splits the strip of material with a planar, vertical cut.

According to yet another preferred aspect of the apparatus, the ply structure is a carcass ply for the uncured tire.

According to still another preferred aspect of the apparatus, the ply structure is a belt ply for the uncured tire.

According to the invention, the apparatus further includes a camera for verifying a shape of the strip of material before the cutting device splits the strip of material.

A method in accordance with the present invention builds an uncured tire. The method includes the steps of: receiving a ply structure by a cylindrical tire building drum; applying a first wedge strip and a second wedge strip to each of two shoulder portions of the ply structure; dispensing a strip of material from an extruder; and splitting the strip of material into the first wedge strip and the second wedge strip.

According to a preferred aspect of the method, a further step includes expanding the ply structure.

According to still another preferred aspect of the method, the first wedge strip and the second wedge strip have equal widths.

According to the invention, a further step includes cooling the strip of material.

According to still another preferred aspect of the method, a further step includes securing the ply structure to the cylindrical tire building drum.

According to yet another preferred aspect of the method, a further step includes placing the extruder adjacent the cylindrical tire building drum.

According to still another preferred aspect of the method, the splitting step creates a planar, vertical cut in the strip material.

According to yet another preferred aspect of the method, the ply structure is a carcass ply of the uncured tire.

According to still another preferred aspect of the method, the ply structure is a belt ply of the uncured tire.

According to the invention, a further step includes verifying a shape of the strip of material before the splitting step.

### Brief Description of the Drawings

The features of the present invention will be more clearly understood when viewed in conjunction with the accompanying drawings. wherein:
FIG. 1 is a schematic elevation view of an example apparatus in accordance with the present invention; and
FIG. 2 is a schematic plan view of another example apparatus in accordance with the present invention.

### Detailed Description of Examples Embodiments of the Present Invention

A machine operation allows it to substantially reduce the cost of building a tire by bringing many machine operations for building the tire together in an efficient operation and layout, which may also reduce the space requirement with emphasis on making the tire components as they are needed, and to be applied, to overcome any inventory issues while facilitating quick changeover for size and type of tire.

A system for building tires may have having a carcass building station, a breaker station, and a tire building station, which mechanically functions with the carcass and breaker stations. Each station may be mechanized, resulting in the automation of tire building. The carcass building station may include a solid surface, a device for supplying and winding an elastomer strip onto the solid surface to form a layer of a desired contour, a device for supplying an elastomer band for wrapping over the top of the layer formed by the elastomer strip, a device for extruding and winding the elastomer strip in the form of a tire component from an extruder and applicator onto the elastomer band.

The tire building station may include a tire building drum capable of expanding the carcass to a toroidal shape, a device for laminating tread material onto the carcass on the drum, and a device for translating the carcass, by removing it from the carcass building station and placing it on the tire building drum and expanding the tire carcass. The breaker station may include a device for cutting finite lengths of various desired materials and widths and sequencing the finite lengths of material in payoff order for accumulation into a breaker package, a device for sequentially supplying the material to the breaker package to form a breaker for a tire, a device for conveying the breaker to the tire carcass on the tire building drum, a device for applying the breaker onto the tire carcass.

Such a method and/or apparatus provide two-stage tire building without unnecessary storage of components for the tire. The method of making a tire includes making a band for the tire carcass which is formed by adding a gum strip to an inner liner covered with a ply to form a band, which is then transferred to a first tire building position. Sidewall, shoulder wedge, and beads may then be added to the first position from which position there may be a transfer to a second tire building position. At the second tire building position, final shaping of the uncured tire may occur as well as the addition of breakers and tread rubber. The sidewalls and shoulder wedge rubber may be wound on from a continuous source of strip rubber onto the carcass at the first tire building position.

The apparatus builds a band to form the tire carcass and its subsequent treatment at a first stage building position. The first step may build a band for a tire carcass including inner liner, gum strip, and a ply. Band building known in the art and there are a number of ways known to build bands, including the use of a belt or a collapsible drum to which is applied the inner liner in the form of a continuous sheet of material generally unreinforced and similarly the ply which is generally reinforced and applied in the form of a continuous sheet of material. The sheet material may be supplied from a calender operation or the like. A solid drum may be used for band building and a gum strip may be added between the inner liner and the ply. The gum strip may be a strip wedge material wound onto the inner liner in any desired contour. Further, a ply of strip material may also be wound over the top of the ply. A chipper may be added in a usual manner.

The portion of the carcass built on the band builder may then be transferred to a first stage building drum. Operations of loading beads at the first stage builder and expanding the drum may occur while the band is loaded on an expander in line with the first stage building drum whereupon a pull-on ring may clamp the band and pull it onto the first stage building drum. At this point bladder turnup may occur followed by strip laminating on sidewall material after which application of a chafer may occur. The first stage building drum may then be collapsed and a transfer of the carcass to a second stage building drum may occur.

A carcass building station may include a band building drum having a head stock or main drive for rotating the drum about its cylindrical axis. The band building drum may have a solid, but collapsible, surface for band building operations. Adjacent the band building drum may be a laminator or strip applicator movable toward the drum and along its surface parallel to the cylindrical axis of the drum. An elastomeric strip may be supplied to the drum from a cold feed extruder after passing the strip over cooling drums to present the strip at an acceptable temperature for application to the drum.

A laminated barrier or gum cushion layer may include strip material wound onto the drum one pass against another as the drum is rotated about its axis. The strip material may be laid flat, one on top the other, and/or at an angle which may range from flat to vertical to thereby facilitate contouring the surface of the wedge gum strip. The contour of the wedge strip may vary over the length of the drum.

Also, adjacent the drum on a side opposite from the applicator may be a server and stitcher. The stitcher may have rollers traversing the surface of the drum to remove trapped air from beneath a component being applied to the drum thereby assuring uniform application of the component to the drum. Both a liner and a ply may be provided to the drum by the server. The liner may be a single band of material or a band made up of multiple turns of material. Where the liner may be particularly wide, the band may be spirally applied over the drum surface in the direction of the cylindrical axis.

Due to the large size of the drum, a super structure may support an "A' frame carrying a spool of material for the tire ply, which material is a band of reinforced (such as by cord) material and a take-up roll for collecting a backup liner inserted between the layers of material in the spool to assure separation. The "A" frame may extend in an elevated position with two standby and alternate material sources for changeover. The elevated position may permit the spool to supply material to a conveyor driven by a drive assembly and having a pivotal end portion for generally tangential placement of the ply material onto the surface of the drum.

Another drive assembly may position an end portion of the conveyor with respect to varying drum diameters. Placing the conveyor over the drum permits a spool with tire liner thereon to be placed below the conveyor. The spool may be carried on a truck and have a take up roll similar to the "A" frame. A liner applier may be moveable toward and away from the drum to apply the liner. A band transfer unit may remove the band from the drum by passing over the drum and engaging the band with suction cups. The band transfer unit may move between the drum and a band expander onto which the band may be deposited.

The band built on the solid drum may be a composite of liner, laminated barrier, ply, and/or an alternative, laminated squeegee or over ply, which is made up, in the manner described above for the laminated barrier, of strip material which may be layered and/or angled one against the other to form the over ply. As a further alternative, the liner may be deleted and the ply may be comprised of multiple bands of reinforced material.

The band expander may have a turret for rotating the band expander there about to a position aligned with a band pull-on. The band pull-on may engage the band after it has been expanded to its desired diameter on the expander, to pull it over a first stage building drum aligned with the band pull-on by moving transversely between the band expander and the building drum. The building drum may be supported by a headstock mounted on a turret for swinging the building drum from one position to the building position, where it is supported by a tailstock. A second stitcher may be located adjacent the building drum in its building position. Also, adjacent the building drum in its building position, but on the opposite side from the second stitcher, may be a second strip applicator or laminator. The strip applicator may apply elastomeric strip to the building drum for supplementing the band thereon with sidewall and shoulder wedge components configured in the same manner as described above for contouring of the gum cushion by the first strip applicator. The second strip applicator may be fed by a second cold feed extruder after the strip passes over two cooling drums.

Simultaneous to the building of the tire carcass in a first stage complex as described above, there may be a parallel operation making up continuous length breaker material. A continuous length of breaker material may be formed by calendering or extrusion around a reinforcing material. A continuous length of a breaker material of various elastomers and reinforcements may make up the individual breakers of the tire in various widths. Subsequently the accumulated breakers may be sequenced by circulating trucks of the material on cars to a cut off where breakers of finite length may be cut from the material in the proper order for which they will pay off to a second stage building drum.

The breakers may be applied in their proper sequence to the second stage building drum, to which now has been transferred the built up tire carcass, by feeding the breakers sequentially onto the tire carcass on the second stage building drum through an in-line server. The tread rubber may be added to the tire after having been shaped by expansion of the second stage building drum and laminated.

The above method of making a tire provides for the continuous makeup of breakers and the supply of sidewall and shoulder wedge material as required for the first stage building as required by the demand as it arises, eliminating the need for storage of these components. Such an apparatus may include a closed loop of moving cars on tracks with one car on an entry track. The loop may operate through transfer cars which cycle the cars between the tracks. The moving cars may accommodate trucks, each of which support a roll of breaker material and a stripper roller for accumulating the liner between the breaker material on roll. The rolls may be supported on axles driven to rotate the rolls. In addition, a truck may also be placed at the exit end of a cutoff server to receive breakers from the server. The trucks may be loaded onto the cars and sequenced through the closed loop.

An overhead conveyor system may be used to transport the trucks through a closed loop. An elevator may elevate the car up into the truck to the level of the cars on the tracks. When all of the trucks are loaded into the closed loop, the closed loop may repetitively produce finite length breakers in sequence. Drives for cutoff server entry and exit end trucks may drive the rolls thereon to supply breaker material from the roll on the entry end, which may then be cut off by an operator and advanced to the truck at the exit end which has its roll driven by the drive to continuously accumulate the finite length breakers in sequence thereon. As each truck's breaker material is used for a breaker for a particular breaker package for a particular tire, the drive may be shifted to alternate positions for allowing the car carrying the truck to cross over to the transfer car. In this manner, the cars may be sequentially rotated through the closed loop to bring each car to the cutoff server in proper sequence to cut from each of the rolls on the cars the proper length breaker to make up a package for a particular tire.

As an example, six cars may be used for a six breaker package for a single tire. For fewer breakers, fewer cars may be circulated through the closed loop. When a truck is in position in front of the cutoff server, the drive may move over toward the truck and engage its axle to enable it to rotate the axle carrying the roll of breaker material on the truck. Material may be fed from the truck onto the cutoff server and measured to length with a surface drive digital encoder set to stop the server for that particular breaker. Material may be cut and the excess wound back up. The next truck may move into position and the next piece of breaker material may be cut and sequentially led down the conveyor of the cutoff server to be wound into the roll on the truck at the exit end of the cutoff server.

The process may continue until the supply of breaker material is exhausted at which point loaded trucks may be exchanged for the empty ones and an empty truck may be installed in the windup position. If the demand for the particular breaker package is met, another set of breaker roll material may be entered into the system to create the breaker package for the next set of tires.

The cycle for the breaker system may be as follows: a full truck of material may be brought to the elevator where the car is raised onto the truck; a car/truck combination proceeds into the system via a short straight section and a transfer car; the car/truck combination may wait in the straight section of track if another car/truck is on the transfer car; up to five more trucks may be loaded in the same way in proper order. An operator stationed at the cutoff server may now have up to six car/truck combinations at her/his disposal. An empty truck may be in windup position at the exit end of the cutoff server. Any time the drive is away from the disengaged position, a limit switch may send a signal preventing a car/truck combination from moving past the material unwind station. The operator may push the depart station button and, if there is a car/truck combination that has just been unloaded, it may move out of position. The operator, then satisfied she/he has the right truck, may push the windup start button and the drive windup may move in and engage the new truck which has moved into position. The operator may unwind stock through a guide underneath a speed control dancer roll and onto the conveyor of the cutoff server using the length measurer. The conveyor may stop at the preset length and the stock may be cut.

When the stock reaches the end of the cutoff server, it may be fed under another speed control dancer roll along with the liner of the windup truck. The operator may then push the retract stock button, which winds up excess material back into the car/truck combination at the front of the cutoff server. This also causes the drive to disengage and retract. When the drive is fully retracted, the operator may push the depart station button and the car/truck combination may move by and around the track for another cycle or to the load/unload station if it is empty. The operator may indicate this on his control panel if the car/truck combination is to go to the load/unload station. The next car/truck combination moves up and the drive moves back into position to repeat the cycle until the supply of material is exhausted or the plant requirements are fulfilled.

When the operator is on his last cycle, the trucks in the closed loop may be unloaded as they are finished and a full truck put in its place so that the flow of work is not disturbed. The operator may continue as soon as she/he replaces the windup truck containing the preassembled breaker package at the exit end of the cutoff server. At the end of a cycle, the truck may be withdrawn from the end of the cutoff server and the drive may be shifted, ready for transfer of the truck at the entry end of the cutoff server to the transfer car as soon as it is shifted into position. Such a method and/or apparatus as described above is disclosed in US-5,554,242.

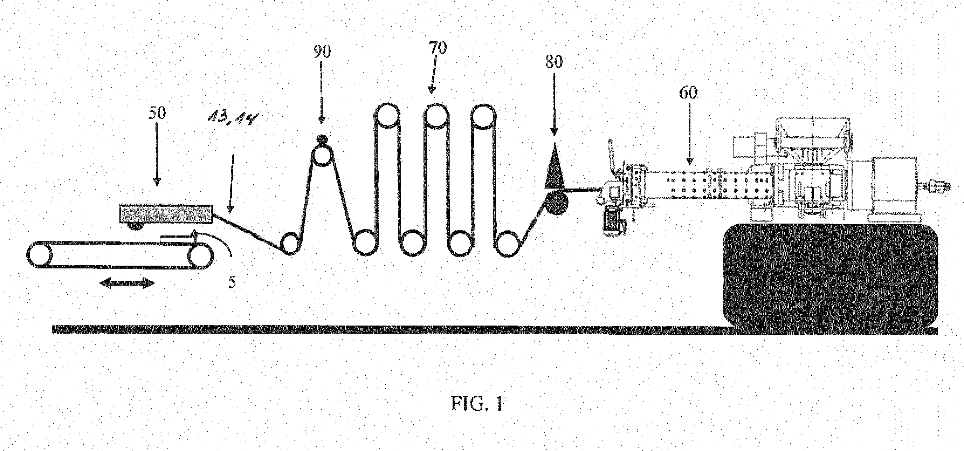

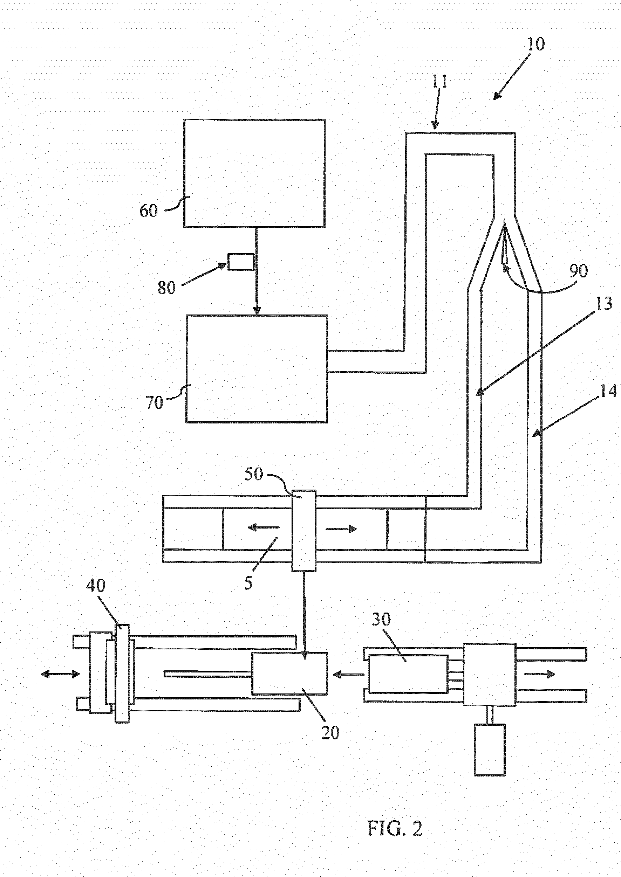

Referring now to the drawings, Fig. 1 and Fig. 2 illustrate a method and apparatus 10 in accordance with the present invention.

A shoulder wedge material 11 is split and wound in a form of two strips 13, 14 onto a carcass ply 5 at a first stage building drum 20. A band expander 30 is preferably swingable from a phantom position shown in Fig. 2 in line with the first stage building drum 20 to allow a band pull-on 40 to traverse over the first stage building drum 20 and clamp the carcass 5 on the band expander 30 to thereafter pull the carcass ply 5 over the first stage building drum 20.

A strip applicator 50 preferably applies both strips 13, 14. The strips 13, 14 are supplied from an extruder 60, which may be either a hot or cold feed extruder. The strips 13, 14 then pass to a strip cooler or festoon 70 before being applied by the strip applicator 50. In the above manner, the strips 13, 14 may be applied directly at the tire building operation as it is made up and there is no requirement for storage of components, such as the shoulder wedges.

Hence, the wedge material 11 is output from the extruder 60, cooled at the strip cooler 70, and then vertically split into the two strips 13, 14, each preferably having equal horizontal widths.

A camera 80 verifies the shape of the wedge material 11 before cooling.

In accordance with this example of the present invention, a cutter 90, such as a knife, preferably in a vertical plane, splits the wedge material 11 into the two strips 13, 14, one for each shoulder of the tire.

Once the strips 13, 14 are applied at the tire building operation, such as to the carcass ply 5 or a belt package of the tire, the strips may support the edges of the belts as the carcass ply or plies 5 curve radially downward into the sidewall area of the tire.

The strips 13, 14 may be flat, but more often may be triangular in cross-section to match the shoulder curvature of the tire.

The strips 13, 14 have been conventionally made in a component preparation area, separate from the tire building area. If the strips 13, 14 are pre-applied to the belt or plies in the tire building area proximate the tire building machine 10 (e.g., within 3 m to 12 m), possible damage, such as crushing, cutting, distortion, contamination, etc., during wind-up or storage, before delivery to the tire building machine 10, may be eliminated.

## Claims

1. An apparatus for building an uncured tire, the apparatus (10) comprising:
a cylindrical tire building drum (20) for receiving a ply structure (5);
an applicator (50) for applying a first wedge strip (13) and a second wedge strip (14) to each of two shoulder portions of the ply structure (5);
an extruder (60) for dispensing a strip of material; and
a cutting device (90) for splitting the strip of material into the first wedge strip (13) and the second wedge strip (14);
**characterized in that** the apparatus (10) further comprises a camera (80) for verifying a shape of the strip of material before the cutting device (90) splits the strip of material and a cooler or festoon (70) between the camera (80) and the cutting device (90).

2. The apparatus of claim 1, further including an expander for the ply structure (5).

3. The apparatus as set forth in claim 2 further including a clamp for securing the ply structure (5) to the expander.

4. The apparatus as set forth in at least one of the previous claims wherein the extruder (60) is disposed proximate to the cylindrical tire building drum (20).

5. The apparatus as set forth in at least one of the previous claims wherein the cutting device (90) is configured to split the strip of material with a planar, vertical cut.

6. A method for building an uncured tire, the method comprising the steps of:
receiving a ply structure (5) by a cylindrical tire building drum (20);
applying a first wedge strip (13) and a second wedge strip (14) to each of two shoulder portions of the ply structure (5);
dispensing a strip of material from an extruder (60); and
splitting the strip of material into the first wedge strip (13) and the second wedge strip (14);
**characterised in that** the method further comprises: verifying a shape of the strip of material with a camera (80) before splitting the strip of material; and cooling the strip of material with a cooler or festoon (70) between the camera (80) and the splitting of the strip of material.

7. The method as set forth in claim 6 further including the step of expanding the ply structure (5).

8. The method as set forth in claim 6 or 7 wherein the first wedge strip (13) and the second wedge strip (14) have equal widths.

9. The method as set forth in at least one of the previous claims 6 to 8 further including the step of securing the ply structure (5) to the cylindrical tire building drum (20).

10. The method as set forth in at least one of the previous claims 6 to 9 further including the step of placing the extruder (60) adjacent the cylindrical tire building drum (20).

11. The method as set forth in at least one of the previous claims 6 to 10 wherein the splitting step creates a planar, vertical cut.

12. The method as set forth in at least one of the previous claims 6 to 11 wherein the ply structure (5) is a carcass ply.

13. The method as set forth in at least one of the previous claims 6 to 11 wherein the ply structure (5) is a belt ply.

## Patentansprüche

1. Einrichtung zum Aufbauen eines ungehärteten Reifens, wobei die Einrichtung (10) Folgendes umfasst:
eine zylindrische Reifenaufbautrommel (20) zum Aufnehmen einer Lagenstruktur (5);
ein Auftragsgerät (50) zum Auftragen eines ersten Keilstreifens (13) und eines zweiten Keilstreifens (14) auf jeden von zwei Schulterabschnitten der Lagenstruktur (5);
einen Extruder (60) zum Abgeben eines Streifens von Material; und
eine Schneidvorrichtung (90) zum Aufteilen des Streifens von Material in den ersten Keilstreifen (13) und den zweiten Keilstreifen (14);
**dadurch gekennzeichnet, dass** die Einrichtung (10) ferner eine Kamera (80) zum Überprüfen einer Form des Streifens von Material, bevor die Schneidvorrichtung (90) den Streifen von Material aufteilt und einen Kühler oder einen Feston (70) zwischen der Kamera (80) und der Schneidvorrichtung (90), umfasst.

2. Einrichtung nach Anspruch 1, die ferner einen Expander für die Lagenstruktur (5) einschließt.

3. Einrichtung nach Anspruch 2, die ferner eine Klammer zum Befestigen der Lagenstruktur (5) an dem Expander einschließt.

4. Einrichtung nach wenigstens einem der vorhergehenden Ansprüche, wobei der Extruder (60) nahe der zylindrischen Reifenbautrommel (20) angeordnet ist.

5. Einrichtung nach wenigstens einem der vorhergehenden Ansprüche, wobei die Schneidvorrichtung (90) konfiguriert ist, um den Streifen von Material mit einem ebenen vertikalen Schnitt zu teilen.

6. Verfahren zum Aufbauen eines ungehärteten Reifens, wobei das Verfahren die folgenden Schritte umfasst:
Aufnehmen einer Lagenstruktur (5) durch eine zylindrische Reifenbautrommel (20);
Auftragen eines ersten Keilstreifens (13) und eines zweiten Keilstreifens (14) auf jeden von zwei Schulterabschnitten der Lagenstruktur (5);
Abgeben eines Streifens von Material aus einem Extruder (60); und
Aufteilen des Streifens von Material in den ersten Keilstreifen (13) und den zweiten Keilstreifen (14);
**dadurch gekennzeichnet, dass** das Verfahren ferner Folgendes umfasst:
Überprüfen einer Form des Streifens von Material mit einer Kamera (80) vor dem Aufteilen des Streifens von Material; und
Abkühlen des Streifens von Material mit einem Kühler oder einem Feston (70) zwischen der Kamera (80) und dem Aufteilen des Streifens von Material.

7. Verfahren nach Anspruch 6, das ferner den Schritt des Expandierens der Lagenstruktur (5) einschließt.

8. Verfahren nach Anspruch 6 oder 7, wobei der erste Keilstreifen (13) und der zweite Keilstreifen (14) gleiche Breiten aufweisen.

9. Verfahren nach wenigstens einem der vorhergehenden Ansprüche 6 bis 8, das ferner den Schritt des Befestigens der Lagenstruktur (5) an der zylindrischen Reifenbautrommel (20) einschließt.

10. Verfahren nach wenigstens einem der vorhergehenden Ansprüche 6 bis 9, das ferner den Schritt des Platzierens des Extruders (60) angrenzend an der zylindrischen Reifenaufbautrommel (20) einschließt.

11. Verfahren nach wenigstens einem der vorhergehenden Ansprüche 6 bis 10, wobei der Aufteilungsschritt einen ebenen vertikalen Schnitt erzeugt.

12. Verfahren nach wenigstens einem der vorhergehenden Ansprüche 6 bis 11, wobei die Lagenstruktur (5) eine Karkassenlage ist.

13. Verfahren nach wenigstens einem der vorhergehenden Ansprüche 6 bis 11, wobei die Lagenstruktur (5) eine Gürtellage ist.

## Revendications

1. Appareil destiné à la confection d'un bandage pneumatique non vulcanisé, l'appareil (10) comprenant :
un tambour cylindrique de confection de bandage pneumatique (20) destiné à la réception d'une structure de nappe (5);
un dispositif faisant office d'applicateur (50) destiné à l'application d'une première bande biseautée (13) et d'une deuxième bande biseautée (14) à chacune de deux portions de la structure de nappe (5) qui font office d'épaulement ;
une extrudeuse (60) destinée à distribuer une bande de matière ; et
un dispositif de coupe (90) destiné à séparer la bande de matière afin d'obtenir la première bande biseautée (13) et la deuxième bande biseautée (14) ;
**caractérisé en ce que** l'appareil (10) comprend en outre une caméra (80) destinée à vérifier une configuration de la bande de matière avant que le dispositif de coupe (90) ne sépare la bande de matière et un dispositif de refroidissement ou un feston (70) entre la caméra (80) et le dispositif de coupe (90).

2. Appareil selon la revendication 1, englobant en outre un dispositif d'expansion pour la structure de nappe (5).

3. Appareil tel qu'indiqué à la revendication 2, englobant en outre un dispositif de fixation destiné à fixer la structure de nappe (5) au dispositif d'expansion.

4. Appareil tel qu'indiqué dans au moins une des revendications précédentes, dans lequel l'extrudeuse (60) est disposée à proximité du tambour cylindrique de confection de bandage pneumatique (20).

5. Appareil tel qu'indiqué dans au moins une des revendications précédentes, dans lequel le dispositif de coupe (90) est configuré pour séparer la bande de matière avec une découpe verticale plane.

6. Procédé destiné à la confection d'un bandage pneumatique non vulcanisé, le procédé comprenant les étapes dans lesquelles :
une structure de nappe (5) est réceptionnée par un tambour cylindrique de confection de bandage pneumatique (20) ;
une première bande biseautée (13) et d'une deuxième bande biseautée (14) sont appliquées à chacune de deux portions de la structure de nappe (5) qui fait office d'épaulement ;
une bande de matière est distribuée à partir d'une extrudeuse (60) ; et
la bande de matière est séparée afin d'obtenir la première bande biseautée (13) et la deuxième bande biseautée (14) ;
**caractérisé en ce que**
le procédé comprend en outre le fait de :
vérifier une configuration de la bande de matière avec une caméra (80) avant la séparation de la bande de matière ; et
refroidir la bande de matière avec un dispositif de refroidissement ou un feston (70) entre la caméra (80) et la découpe de la bande de matière.

7. Procédé tel qu'indiqué à la revendication 6, englobant en outre l'étape dans laquelle on soumet la structure de nappe (5) à une expansion.

8. Procédé tel qu'indiqué à la revendication 6 ou 7, englobant en outre l'étape dans laquelle la première bande biseautée (13) et la deuxième bande biseautée (14) possèdent des largeurs égales.

9. Procédé tel qu'indiqué dans au moins une des revendications précédentes 6 à 8, englobant en outre l'étape dans laquelle la structure de nappe (5) est fixée au tambour cylindrique de confection de bandage pneumatique (20).

10. Procédé tel qu'indiqué dans au moins une des revendications précédentes 6 à 9, englobant en outre l'étape dans laquelle l'extrudeuse (60) est placée en position adjacente par rapport au tambour cylindrique de confection de bandage pneumatique (20).

11. Procédé tel qu'indiqué dans au moins une des revendications précédentes 6 à 10, dans lequel l'étape de coupe permet d'obtenir une découpe verticale plane.

12. Procédé tel qu'indiqué dans au moins une des revendications précédentes 6 à 11, dans lequel la structure de nappe (5) représente une nappe de carcasse.

13. Procédé tel qu'indiqué dans au moins une des revendications précédentes 6 à 11, dans lequel la structure de nappe (5) représente une nappe de ceinture.
